# EUROPEAN PATENT APPLICATION

(11) **EP 2 521 019 A1**
(43) Date of publication of application: **07.11.2012**
(21) Application number: 11169515.1
(22) Date of filing: 10.06.2011
(51) Int. Cl.: G06F 3/048

(54) **Systems and methods for interface management**

(30) Priority: 06.05.2011 US 102600
(71) Applicant: HTC Corporation, Taoyuan County 330 (TW)
(72) Inventor: Bamford, Drew, WA, WA Washington 98005 (US); Brinda, David, WA, WA Washington 98005 (US); Cole, Paul Kristopher, 13920 SE Eastgate Way, Suite 400 Bellevue,, WA Washington 98005 (US); Huang, Sheng-Hsin, 330 Taoyuan City, Taoyuan County (TW); Rong, Jye, 330 Taoyuan City, Taoyuan County (TW); Cheng, Hsu-Jung, 330 Taoyuan City, Taoyuan County (TW)
(74) Representative: 2K Patentanwälte Blasberg Kewitz & Reichel

(57) **Abstract**

Methods and systems for interface management are provided. First, at least one interface is provided and displayed on a screen of the electronic device. The interface is a page or a menu. A plurality of candidate tilt interface images corresponding to the interface are provided, wherein the respective candidate tilt interface images correspond to the interface which is to be rotated at various angles. Then, a signal including a movement of an object continuously detected on the screen is received. In response to the signal, one of the candidate tilt interface images is selected as a specific tilt interface image according to a distance corresponding to the movement of the object on the screen, and the specific tilt interface image is displayed on the screen.

## Description

### BACKGROUND OF THE INVENTION

### Field of the Invention

The disclosure relates generally to interface browsing, and, more particularly to methods and systems for interface management that display interfaces of an electronic device with 3D (three-dimensional) tilt effects when the interface are rotated.

### Description of the Related Art

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

Generally, a handheld device can install a large amount of functions which are implemented as widgets, applications, virtual or physical buttons, or any other kind of executable program code. Due to the size limitation of screens or other classification requirements, several interfaces, such as menus or pages can be provided in the handheld device. Users can perform a switch operation to switch between the interfaces by using a virtual or physical key, or a touch-sensitive screen.

Conventionally, the arrangement and display of the interface are uninteresting. For example, the interfaces are respectively rendered as 2D images, and one of the images representing the interfaces is displayed on the screen. When the switch operation is performed, another image is displayed on the screen to replace the original image. To enhance the value of devices and increase user experience, it is an objective of the present application to provide functional and applicable interface management systems for electronic devices.

### BRIEF SUMMARY OF THE INVENTION

Methods and systems for interface management are provided.

In an embodiment of a method for interface management, at least one interface is provided and displayed on a screen of the electronic device. The interface is a page or a menu. A plurality of candidate tilt interface images corresponding to the interface are provided, wherein the respective candidate tilt interface images correspond to the interface which is to be rotated at various angles. Then, a signal including a movement of an object continuously detected on the screen is received. In response to the signal, one of the candidate tilt interface images is selected as a specific tilt interface image according to a distance corresponding to the movement of the object on the screen, and the specific tilt interface image is displayed on the screen.

An embodiment of a system for interface management includes a storage unit, a screen, and a processing unit. The storage unit includes at least one interface and a plurality of candidate tilt interface images corresponding to the interface. The interface is a page or a menu, and the respective candidate tilt interface images correspond to the interface which is to be rotated at various angles. The screen displays the at least one interface. The processing unit receives a signal including a movement of an object continuously detected on the screen is received, and in response to the signal, selects one of the candidate tilt interface images as a specific tilt interface image according to a distance corresponding to the movement of the object on the screen, and displays the specific tilt interface image on the screen.

In some embodiments, the interface is implemented with multiple display layers, wherein a plurality of objects of the interface are deployed to be displayed in different display layers, such that a 3D visual effect can be viewed via the screen.

In some embodiments, the at least one interface is placed in a circle across a 3D space to form a 3D object, and when the signal is received, the 3D object is rotated according to the distance of the signal.

In some embodiments, a specific angle is corresponded based on the distance corresponding to the movement of the object on the screen, and the specific tilt interface image is selected based on the specific angle.

Methods for operational interface management may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a system for operational interface management of the invention;

Fig. 2 is a schematic diagram illustrating an embodiment of an example of an interface of the invention;

Fig. 3 is a schematic diagram illustrating an embodiment of an example of an interface circle of the invention;

Fig. 4 is a schematic diagram illustrating an embodiment of an example of a virtual 3D polyhedron of the invention;

Fig. 5 is a schematic diagram illustrating a concept of a virtual distance between a predefined axle and a screen;

Fig. 6A is a schematic diagram illustrating an embodiment of an example of a screen view for a portrait mode of the invention;

Fig. 6B is a schematic diagram illustrating an embodiment of an example of a screen view for a landscape mode of the invention;

Fig. 7 is a flowchart of an embodiment of a method for operational interface management of the invention;

Fig. 8 is a flowchart of an embodiment of a method for determining a virtual distance and a background of the invention;

Figs. 9A to 9D are schematic diagrams illustrating an embodiment of an example of spinning of the virtual 3D polyhedron of the invention;

Fig. 10 is a flowchart of another embodiment of a method for operational interface management of the invention;

Fig. 11 is a schematic diagram illustrating an embodiment of an example of an interface with multiple display layers of the invention;

Figs. 12A-12C are schematic diagrams illustrating embodiments of examples of a screen displaying various candidate tilt interface images corresponding to the interface in Fig. 11 of the invention;

Fig. 13 is a flowchart of an embodiment of a method for operational interface management of the invention;

Fig. 14 is a flowchart of another embodiment of a method for operational interface management of the invention; and

Figs. 15A-15C are schematic diagrams illustrating an embodiment of an example of transition for the rotation of an interface.

### DETAILED DESCRIPTION OF THE INVENTION

Methods and systems for operational interface management are provided.

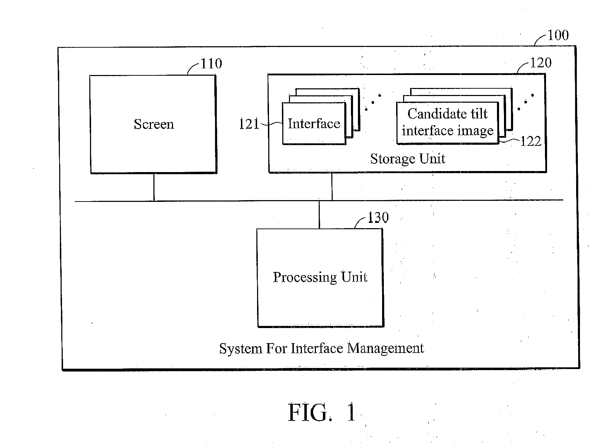

Fig. 1 is a schematic diagram illustrating an embodiment of a system for operational interface management of the invention. The system for operational interface management can be used in an electronic device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

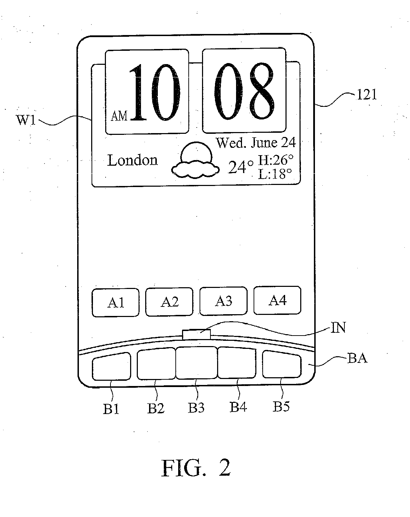

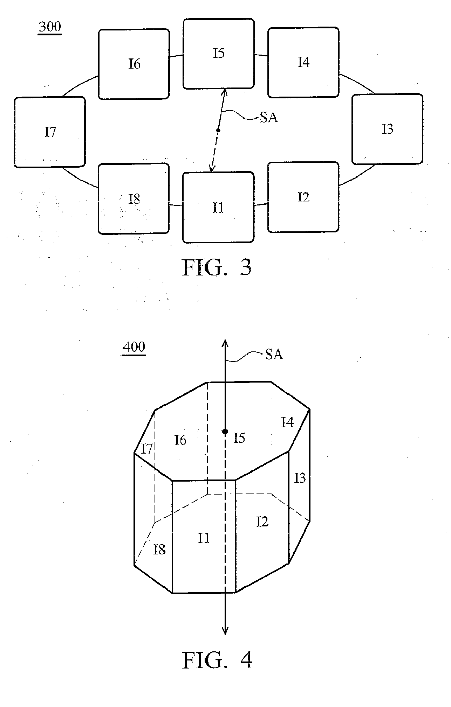

The system for operational interface management 100 comprises a screen 110, a storage unit 120, and a processing unit 130. The screen 110 can display related data, such as texts, figures, interfaces, and/or related information. It is understood that, in some embodiments, the screen 110 may be integrated with a touch-sensitive device (not shown). The touch-sensitive device has a touch-sensitive surface comprising sensors in at least one dimension to detect contact and movement of at least one object (input tool), such as a pen/stylus or finger near or on the touch-sensitive surface. Accordingly, users would be able to input related commands or signals via the screen. The storage unit 120 comprises a plurality of interfaces 121. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interfaces can comprise at least one widget, at least one application icon, and/or at least one button. Fig. 2 is a schematic diagram illustrating an embodiment of an example of an interface of the invention. As shown in Fig. 2, the interface 121 shows a widget W1, four application shortcuts A1∼A4, and five button B1∼B5, wherein the widget W1 can obtain related data, and perform related operations to show related results on the interface 121, and related applications or functions can be activated when the application shortcuts or the buttons are selected. It is understood that, in some embodiments, the plurality of interfaces 121 may be arranged to form a 3D object, such as an interface circle 300, as shown in Fig. 3, or a virtual 3D polyhedron 400, as shown in Fig. 4.

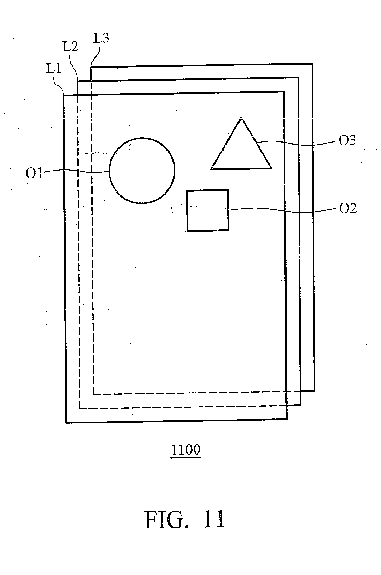

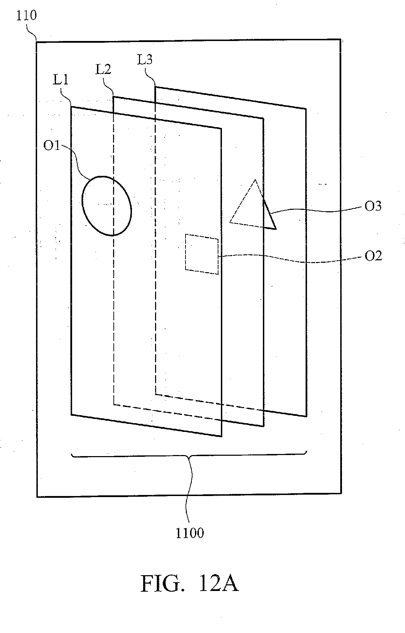

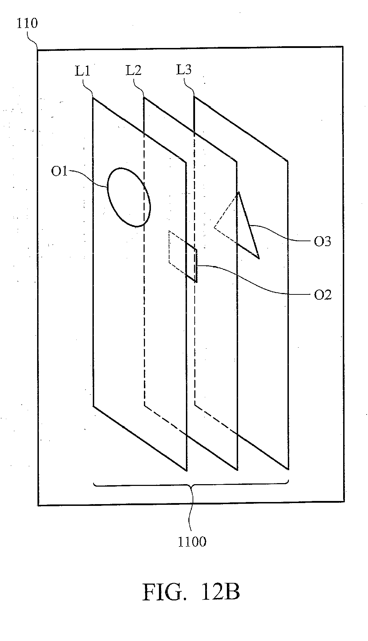

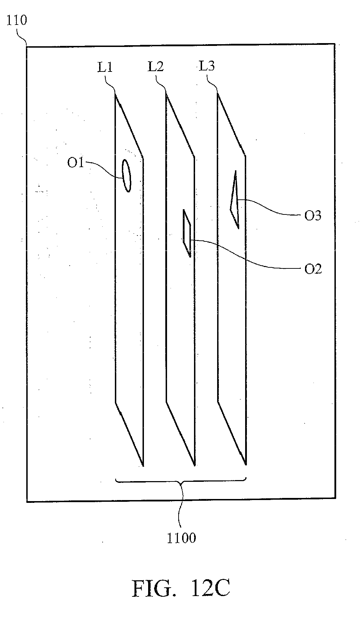

Fig. 11 is a schematic diagram illustrating an embodiment of an example of an interface with multiple display layers of the invention. As shown in Fig. 11, the interface 1100 has three display layers L1, L2 and L3, in which object O1 is deployed to be displayed in the display layer L1, object 02 is deployed to be displayed in the display layer L2, and object 03 is deployed to be displayed in the display layer L3. It is understood that, with deployment of objects in different display layers, 3D visual effects can be viewed via the screen. It is noted that, the respective interfaces may have 3D tilt effects during the rotation of the respective interfaces when the interface are switched. The storage unit 120 may comprise a plurality of candidate tilt interface images 122 for the respective interface. The combination of the candidate tilt interface images 122 may show the transition for the rotation of the interface. It is understood that, the respective candidate tilt interface images can be corresponded to a respective interface which is to be rotated at various angles. For example, candidate tilt interface images corresponding to the interface of Fig. 11 to be rotated, from right to left, at 20°, 45° and 80° are respectively shown in Figs. 12A, 12B and 12C. In some embodiments, the candidate tilt interface images can be generated in advance. When a movement of an object is continuously detected on the screen 110, one of the candidate tilt interface images can be selected and displayed in the screen 110 according to a distance of the movement. It is noted that, in some embodiments, the distance of the movement of the object continuously detected on the screen 110 can be directly corresponded to a specific candidate tilt interface image. In some embodiments, the distance of the movement of the object continuously detected on the screen 110 can be first corresponded to a specific angel, and a specific candidate tilt interface image can be corresponded according to the specific angel. Further, in some embodiments, a 3D graphic engine can be employed to dynamically generate a tilt interface image corresponding to the respective interfaces according to a distance of a movement of an object continuously detected on the screen 110. Similarly, in some embodiments, the tilt interface image may correspond to an interface which is to be rotated at a specific angle.

It is understood that, in some embodiments, the plurality of interfaces 121 may be arranged to form a 3D object, such as an interface circle 300, as shown in Fig. 3, or a virtual 3D polyhedron 400, as shown in Fig. 4. It is noted that, in the example of Fig. 3, the interfaces I1∼I8 are arranged in sequence, and the interface circle 300 has a predefined axle SA, in which the interface circle 300 can be spun with respect to the predefined axle SA. In some embodiments, the plurality of interfaces 121 may be arranged to form a virtual 3D polyhedron 400, as shown in Fig. 4. It is noted that, in the example of Fig. 4, the interfaces I1∼I8 are arranged in sequence, and form the surfaces of the virtual 3D polyhedron 400 except for the surfaces which are perpendicular to a predefined axle SA of the virtual 3D polyhedron 400, in which the virtual 3D polyhedron 400 can be spun with respect to the predefined axle SA.

It is understood that, since the plurality of interfaces 121 are arranged in sequence, in some embodiments, an indicator IN showing a relative position of an interface currently displayed on the screen 110 among the plurality of interfaces 121 can be also displayed in the interface, as shown in Fig. 2. It is understood that, in some embodiments, when the interface are switched, the indicator IN will accordingly move to indicate the interface currently being viewed on the screen. In some embodiments, the indicator IN will move in the opposite direction of the object such as a finger movement on the screen.

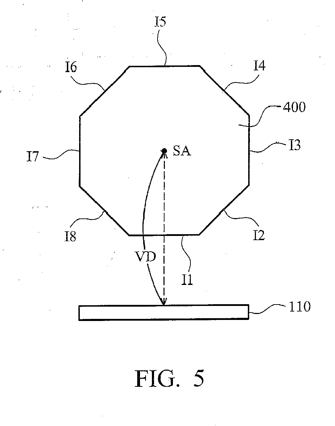

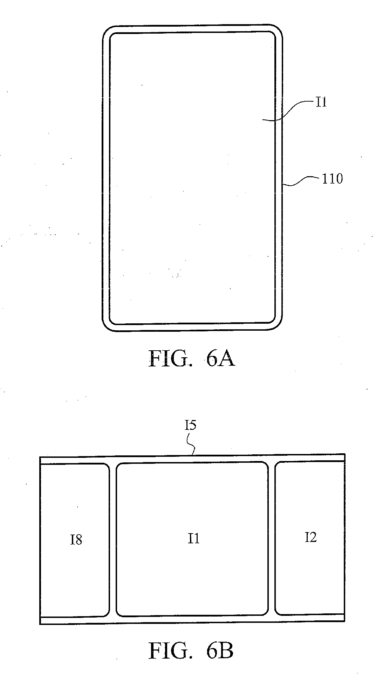

The processing unit 130 can perform the method for interface management of the present invention, which will be discussed further in the following paragraphs. It is noted that, the processing unit 130 can display the 3D object, such as the interface circle or the virtual 3D polyhedron on the screen 110. Note that, a concept of a virtual distance, used to determine where the 3D object should be located behind and away from the screen will be introduced. That is, the 3D object is located at the virtual distance behind the screen 110. For example, as shown in Fig. 5, the virtual 3D polyhedron 400 can be located at a virtual distance VD behind the screen 110. It is understood that, in some embodiments, the virtual distance VD is a distance from the screen 110 to the predefined axle SA. The virtual distance VD can dynamically adjust a size of the virtual 3D polyhedron 400 to be viewed on the screen 110. The virtual 3D polyhedron 400 will be viewed as being small when the virtual distance is being large, and the virtual 3D polyhedron 400 will be viewed as being large when the virtual distance is small. For example, when the browsing mode of the electronic device is a portrait mode, the virtual distance between the predefined axle of the 3D object, such as the interface circle or the virtual 3D polyhedron and the screen 110 can be set to a first value, and when the browsing mode of the electronic device is a landscape mode, the virtual distance between the predefined axle of the 3D object, such as the interface circle or the virtual 3D polyhedron and the screen 110 can be set to a second value, in which the second value is greater than the first value, such that only one interface is displayed on the screen 110 when the browsing mode of the electronic device is the portrait mode, as shown in Fig. 6A, and one completely displayed interface and two partially displayed interfaces which are adjacent to the completely displayed interface are displayed on the screen 110 when the browsing mode of the electronic device is the landscape mode, as shown in Fig. 6B. It is noted that, an interface which is completely displayed means the whole interface is displayed, and an interface which is partially displayed means only a part of the interface is displayed. As described, the 3D object, such as the interface circle or the virtual 3D polyhedron can be spun with respect to the predefined axle SA. During the spinning of the 3D object, the virtual distance between the predefined axle SA of the 3D object and the screen 110 will be varied, which will be discussed further in the following paragraphs.

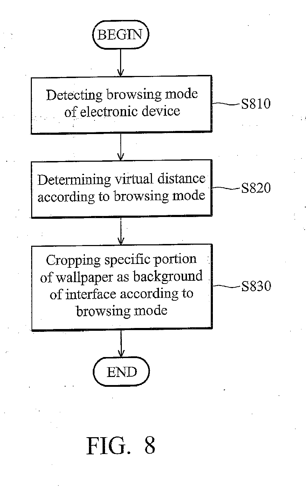

In step S710, a virtual distance between a predefined axle of a 3D object, such as an interface circle or a virtual 3D polyhedron and a screen of the electronic device is determined. It is understood that, in some embodiments, the 3D object may comprise a plurality of interfaces which are placed, in sequence, in a circle across a 3D space. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. It is understood that, the virtual distance can be predefined or determined according to various requirements or applications. In some embodiments, the virtual distance can be determined according to the browsing mode of the electronic device. Fig. 8 is a flowchart of an embodiment of a method for determining a virtual distance and a background of the invention. In step S810, the browsing mode of the electronic device is detected. In step S820, the virtual distance is determined according to the browsing mode of the electronic device. It is understood that, in some embodiments, when the browsing mode of the electronic device is a portrait mode, the virtual distance can be set to a first value, and when the browsing mode of the electronic device is a landscape mode, the virtual distance can be set to a second value, in which the second value is greater than the first value. It is noted that, the 3D object, such as the interface circle or the virtual 3D polyhedron will be viewed as being small when the virtual distance is large, and the 3D object, such as the interface circle or the virtual 3D polyhedron will be viewed as being large when the virtual distance is small. In some embodiments, only one interface is displayed on the screen when the browsing mode of the electronic device is the portrait mode, and one completely displayed interface and two partially displayed interfaces which are adjacent to the completely displayed interface are displayed on the screen when the browsing mode of the electronic device is the landscape mode. Similarly, an interface which is completely displayed means the whole interface is displayed, and an interface which is partially displayed means only a part of the interface is displayed. Then, in step S830, a specific portion is cropped from wallpaper according to the browsing mode of the electronic device. The specific portion of the wallpaper will be displayed as background of the interface. It is understood that, in some embodiments, when users switch between the interfaces, the background wallpaper will not slide. Meanwhile, the size of the wallpaper and the cropping, when it is set to the wallpaper, should change. In some embodiments, the wallpaper may have an equal height and length, such as 1024x1024. In the portrait mode, the center part of the wallpaper is cropped and used as background and the left/right part of the wallpaper is not used. In the landscape mode, the center part of the wallpaper is cropped and used as background and the upper/lower part of the wallpaper is not used. It is understood that, step S830 can be selectively performed according to various requirements and applications.

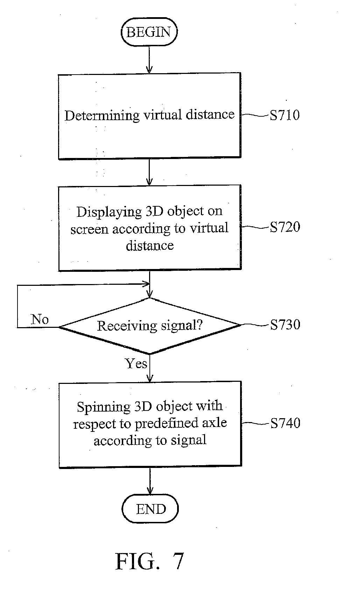

Referring to Fig. 7, in step S720, the 3D object, such as the interface circle or the virtual 3D polyhedron is displayed on the screen according to the determined virtual distance. For example, the 3D object is located at the determined virtual distance behind the screen. It is understood that, in some embodiments, a default interface will be displayed on the screen when the electronic device is activated, or a specific interface will be displayed on the screen when the electronic device is resumed from a specific state, in which the specific interface is the final interface of the specific state. It is understood that, in some embodiments, the browsing mode of the electronic device will be continuously detected, and the virtual distance will be dynamically adjusted when the browsing mode of the electronic device is changed. In step S730, it is determined whether a signal has been received. It is understood that, in some embodiments, the signal may be a gesture of an object on the screen. The gesture is used to trigger the electronic device to perform an interface switch operation. The gesture may comprise a distance, a contact time corresponding to the object on the screen, and a velocity determined based on the distance and the contact time. If no signal is received (No in step S730), the procedure remains at step S730. If a signal is received (Yes in step S730), in step S740, the 3D object, such as the interface circle or the virtual 3D polyhedron is spun with respect to the predefined axle, wherein the virtual distance varies gradually according to the signal during the spinning of the 3D object. It is understood that, in some embodiments, during the spinning of the 3D object, the 3D object can be stopped when a long contact on the screen is detected.

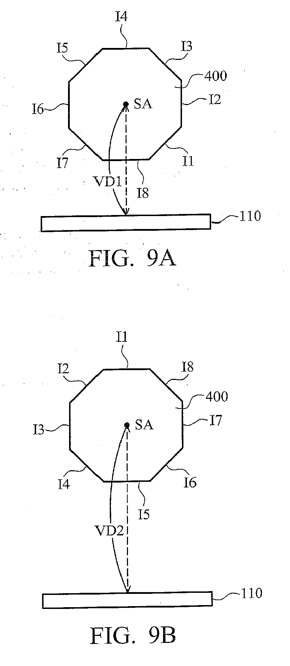

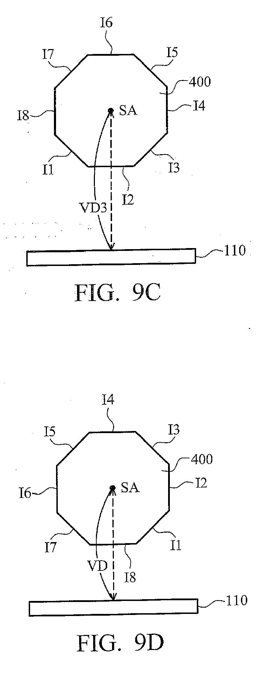

It is understood that, in some embodiments, during the spinning of the 3D object, the virtual distance varies gradually from a first predefined value, such as the first value in the portrait mode to a specific value, determined, based on the velocity, for example, of the signal, before finally returning back to the virtual distance of the first predefined value. That is, during the spinning of the 3D object, users can view that the 3D object is first far away from the screen, and then closer to the screen. Figs. 9A to 9D are schematic diagrams illustrating an embodiment of an example of spinning of the virtual 3D polyhedron of the invention. Initially, the virtual 3D polyhedron is located at a virtual distance VD behind the screen, as shown in Fig. 5. When a signal is received, the specific value of the virtual distance can be determined as a virtual distance VD2 based on the signal. First, the 3D object is located at a virtual distance VD1 (Fig. 9A) behind the screen, and located at a farthest virtual distance VD2 (Fig. 9B) behind the screen. Then, the 3D object is closed to the screen, wherein the 3D object is located at a virtual distance VD3 (Fig. 9C) behind the screen, and finally located at the initial virtual distance VD (Fig. 9D) behind the screen, wherein the virtual distance VD2 is greater than the virtual distance VD1 or the virtual distance VD3, and the virtual distance VD1 or the virtual distance VD3 is greater than the initial virtual distance VD. Further, it is understood that, in some embodiments, a spinning velocity of the spinning of the virtual 3D polyhedron can vary, and the spinning velocity of the spinning of the virtual 3D polyhedron can be from a first velocity, determined, based on the signal to 0. That is, during the spinning of the interface circle or the virtual 3D polyhedron, users can view that the spinning velocity of the interface circle or the virtual 3D polyhedron is gradually decreasing. As described, the farthest virtual distance (specific value) can be determined based on the velocity of the signal. It is understood that, in some embodiments, more circles will be spun when the velocity of the signal is high, and less circles will be spun when the velocity of the signal is slow. It is also understood that, in some embodiments, a specific interface can be located among the plurality of interfaces based on the signal, and the specific interface is displayed on the screen after the spinning of the virtual 3D polyhedron (when the virtual 3D polyhedron is stopped).

It is understood that, in some embodiments, a 3D graphic engine can be employed to dynamically generate at least one frame/picture corresponding to the transition for the spinning of the 3D object, such as the interface circle or the virtual 3D polyhedron by inputting related parameters, such as the various virtual distances of the interface circle or the virtual 3D polyhedron, the number of frames/pictures expected to be generated, the spinning velocity, and/or the located specific interface. In some embodiments, the frames/pictures corresponding to the transition for the spinning of the interface circle or the virtual 3D polyhedron can be generated in advance for various situations, and stored in a database. Once related parameters, such as the various virtual distances of the interface circle or the virtual 3D polyhedron, the number of frames/pictures expected to be generated, the spinning velocity, and/or the located specific interface are determined, related frames/pictures can be accordingly retrieved from the database for playback.

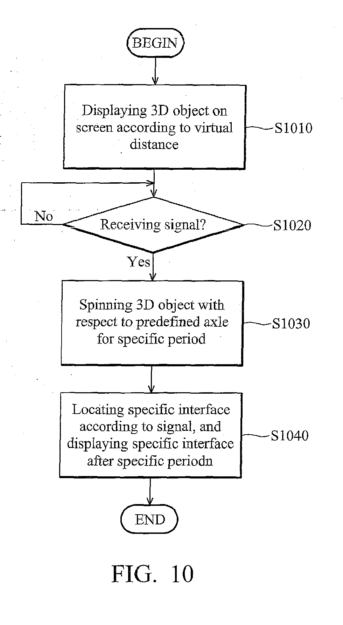

Fig. 10 is a flowchart of another embodiment of a method for interface management of the invention. The method for interface management can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto.

In step S1010, a 3D object, such as an interface circle or a virtual 3D polyhedron is displayed on the screen according to a virtual distance. Similarly, in some embodiments, the 3D object may comprise a plurality of interfaces which are placed, in sequence, in a circle across a 3D space. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. Similarly, in some embodiments, a default interface will be displayed on the screen when the electronic device is activated, or a specific interface will be displayed on the screen when the electronic device is resumed from a specific state, in which the specific interface is the final interface of the specific state. It is understood that, in some embodiments, the virtual distance can be used to determine where the 3D object should be located behind away from the screen. That is, the 3D object is located behind the screen, and a predefined axle of the 3D object is away from the screen with the virtual distance. The virtual distance can be predefined or determined according to various requirements or applications. In some embodiments, the virtual distance can be determined according to the browsing mode of the electronic device. Similarly, in some embodiments, the browsing mode of the electronic device will be continuously detected, and the virtual distance will be dynamically adjusted when the browsing mode of the electronic device is changed. In step S1020, it is determined whether a signal has been received. Similarly, in some embodiments, the signal may be a gesture of an object on the screen. The gesture is used to trigger the electronic device to perform an interface switch operation. The gesture may comprise a distance, a contact time corresponding to the object on the screen, and a velocity determined, based on the distance and the contact time. If no signal is received (No in step S1020), the procedure remains at step S1020. If a signal is received (Yes in step S1020), in step S1030, the 3D object, such as the interface circle or the virtual 3D polyhedron is spun with respect to the predefined axle for a specific period, wherein the virtual distance varies gradually according to the signal during the spinning of the 3D object.

It is understood that, in some embodiments, the specific period can be fixed. It is understood that, in some embodiments, the specific period can be determined, based on the signal. For example, when the velocity corresponding to the input signal is fast, the specific period is long, and when the velocity corresponding to the input signal is slow, the specific period is short. In some embodiments, during the spinning of the 3D object, the virtual distance varies gradually from a first predefined value, such as the first value in the portrait mode to a specific value, determined, based on the velocity, for example, of the signal, before finally returning back to the virtual distance of the first predefined value. That is, during the spinning of the 3D object, users can view that the 3D object is first far away from the screen, and then closer to the screen. Further, in some embodiments, a spinning velocity of the spinning of the 3D object can vary, and the spinning velocity of the spinning of the 3D object can be from a first velocity, determined, based on the signal to 0. That is, during the spinning of the 3D object, users can view that the spinning velocity of the 3D object is gradually decreasing. It is understood that, in some embodiments, more circles will be spun when the velocity of the signal is high, and less circles will be spun when the velocity of the signal is slow. It is understood that, a specific interface can be located among the plurality of interfaces based on the signal. After the specific period is ended (the spinning of the 3D object), in step S1040, the specific interface is displayed on the screen. Similarly, in some embodiments, during the spinning of the 3D object, the 3D object can be stopped when a long contact on the screen is detected.

Similarly, in some embodiments, a 3D graphic engine can be employed to dynamically generate at least one frame/picture corresponding to the transition for the spinning of the 3D object, such as the interface circle or the virtual 3D polyhedron by inputting related parameters, such as the various virtual distances of the 3D object, the number of frames/pictures expected to be generated, the spinning velocity, the specific period, and/or the located specific interface. In some embodiments, the frames/pictures corresponding to the transition for the spinning of the3D object can be generated in advance for various situations, and stored in a database. Once related parameters, such as the various virtual distances of the 3D object, the number of frames/pictures expected to be generated, the spinning velocity, the specific period, and/or the located specific interface are determined, related frames/pictures can be accordingly retrieved from the database for playback.

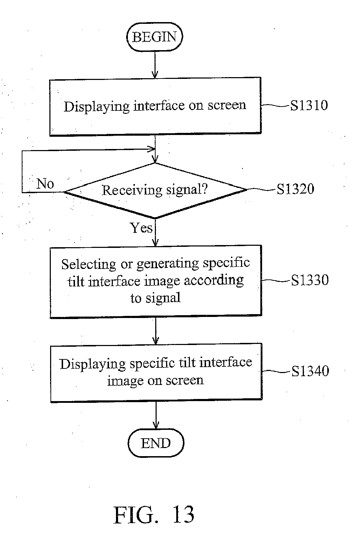

Fig. 13 is a flowchart of an embodiment of a method for interface management of the invention. The method for operational interface management can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto. In the embodiment, 3D tilt effects for respective interfaces can be viewed via the screen.

In step S1310, an interface is displayed on the screen. It is understood that, in some embodiments, several interfaces can be placed, in sequence, in a circle across a 3D space, to form a 3D object, such as an interface circle or a virtual 3D polyhedron, as described above. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. Similarly, in some embodiments, a default interface will be displayed on the screen when the electronic device is activated, or a specific interface will be displayed on the screen when the electronic device is resumed from a specific state, in which the specific interface is the final interface of the specific state. In step S1320, it is determined whether a signal has been received. It is understood that, in some embodiments, the signal may be a movement of an object on the screen. The movement is used to trigger the electronic device to perform an interface rotation/switch operation. When the signal is received, the 3D object, such as the interface circle or the virtual 3D polyhedron can be rotated. The movement may comprise a distance. If no signal is received (No in step S1320), the procedure remains at step S1320. If a signal is received (Yes in step S1320), in step S1330, a specific tilt interface image is dynamically generated or selected from a plurality of candidate tilt interface images generated in advance according to the signal. Similarly, in some embodiments, a 3D graphic engine can be employed to dynamically generate a tilt interface image corresponding to a respective interface according to the distance of the movement of the object. In some embodiments, the tilt interface image may correspond to an interface which is to be rotated at a specific angle. In some embodiments, a plurality of candidate tilt interface images corresponding to a respective interface can be generated in advance for various angles, and stored in a database of the storage unit. The combination of the candidate tilt interface images may show the transitions for the rotation of the interface. When a movement of an object is detected on the screen, one of the candidate tilt interface images can be selected and displayed in the screen according to the distance of the movement. Similarly, in some embodiments, the distance of the movement of the object continuously detected on the screen 110 can be directly corresponded to a specific candidate tilt interface image. In some embodiments, the distance of the movement of the object continuously detected on the screen 110 can be first corresponded to a specific angel, and a specific candidate tilt interface image can be corresponded according to the specific angel. After the specific tilt interface image is generated or selected, in step S1340, the specific tilt interface image is displayed on the screen.

For example, when the screen 110 currently displays the interface 1100 in Fig. 11, and a user slides a finger on the screen 110 with a distance of 1 cm, the candidate tilt interface image corresponding to the interface of Fig. 11 to be rotated, from right to left, at 20° is retrieved, and displayed on the screen, as shown in Fig. 12A. When a user slides a finger on the screen 110 with a distance of 2 cm, the candidate tilt interface image corresponding to the interface of Fig. 11 to be rotated, from right to left, at 45° is retrieved, and displayed on the screen, as shown in Fig. 12B. When a user slides a finger on the screen 110 with a distance of 3 cm, the candidate tilt interface image corresponding to the interface of Fig. 11 to be rotated, from right to left, at 80° is retrieved, and displayed on the screen, as shown in Fig. 12C.

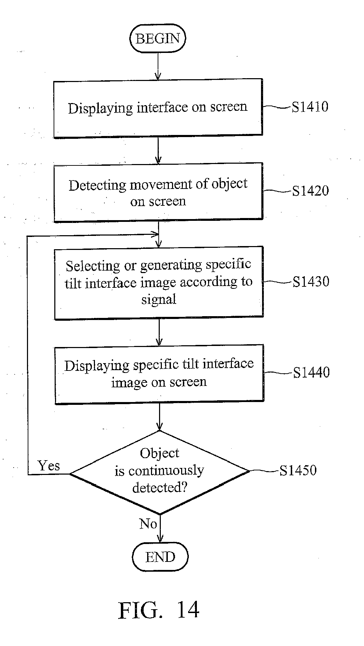

Fig. 14 is a flowchart of another embodiment of a method for interface management of the invention. The method for operational interface management can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto. In the embodiment, 3D tilt effects for respective interfaces can be viewed via the screen, and the transitions for the rotation of the interface can be dynamically displayed based on the movement of an object on the screen.

In step S1410, an interface is displayed on the screen. Similarly, in some embodiments, several interfaces can be placed, in sequence, in a circle across a 3D space, to form a 3D object, such as an interface circle or a virtual 3D polyhedron, as described above. It is understood that, in some embodiments, the respective interface may be a page defined in Android system. In some embodiments, the respective interface may include a menu of the electronic device. It is noted that, in some embodiments, the interfaces can form an extended desktop, and the respective interface is a part of the extended desktop. It is understood that, in some embodiments, the respective interface can be implemented with multiple display layers, wherein a plurality of objects of the respective interface are deployed to be displayed in different display layers, such that a 3D visual effect can be viewed via the screen. In some embodiments, the respective interface can comprise at least one widget, at least one application icon, and/or at least one button. Similarly, in some embodiments, a default interface will be displayed on the screen when the electronic device is activated, or a specific interface will be displayed on the screen when the electronic device is resumed from a specific state, in which the specific interface is the final interface of the specific state. In step S1420, a movement of an object on the screen is detected. Similarly, in some embodiments, the movement is used to trigger the electronic device to perform an interface rotation/switch operation. When the movement is received, the 3D object, such as the interface circle or the virtual 3D polyhedron can be accordingly rotated. In step S1430, a specific tilt interface image is dynamically generated or selected from a plurality of candidate tilt interface images generated in advance according to a distance of the movement. Similarly, in some embodiments, a 3D graphic engine can be employed to dynamically generate a tilt interface image corresponding to a respective interface according to the distance of the movement of the object. In some embodiments, the tilt interface image may correspond to an interface which is to be rotated at a specific angle. In some embodiments, a plurality of candidate tilt interface images corresponding to a respective interface can be generated in advance for various angles, and stored in a database of the storage unit. The combination of the candidate tilt interface images may show the transitions for the rotation of the interface. When a movement of an object is detected on the screen, one of the candidate tilt interface images can be selected and displayed in the screen according to the distance of the movement. Similarly, in some embodiments, the distance of the movement of the object continuously detected on the screen 110 can be directly corresponded to a specific candidate tilt interface image. In some embodiments, the distance of the movement of the object continuously detected on the screen 110 can be first corresponded to a specific angel, and a specific candidate tilt interface image can be corresponded according to the specific angel. After the specific tilt interface image is generated or selected, in step S1440, the specific tilt interface image is displayed on the screen. In step S1450, it is determined whether the object is continuously detected on the screen. When the object is continuously detected on the screen (the object is still on the screen) (Yes in step S1450), the procedure returns to step S1430, wherein another specific tilt interface image can be dynamically generated or selected from the candidate tilt interface images according to new distance of the movement of the object. When the object is no longer detected on the screen (No in step S1450), the procedure is terminated. It is understood that, in some embodiments, after the trigger of the signal (movement of the object), another interface placed adjacent to the interface can be displayed on the screen.

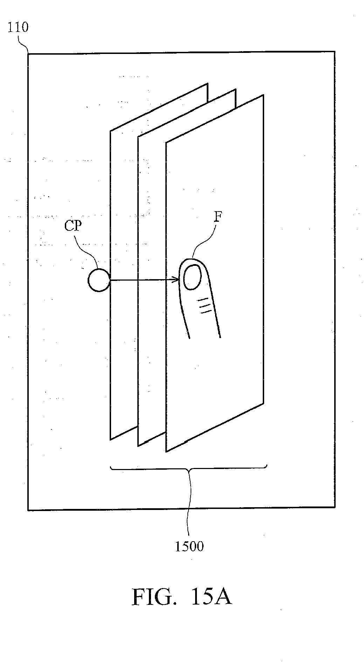

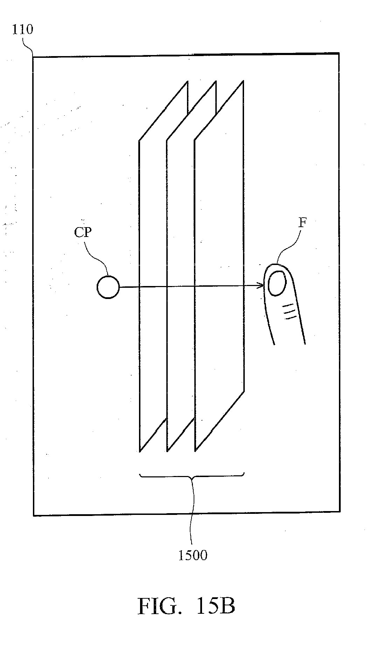

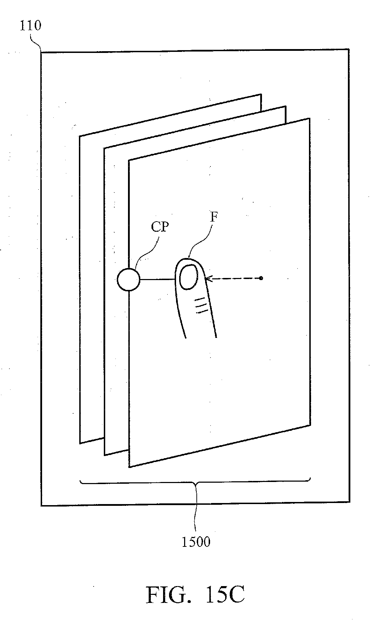

For example, when a user uses a finger F to touch the screen 110 at a contact point CP, and slides the finger F, from left to right, on the screen 110, a first tilt interface image corresponding to an interface 1500 to be rotated at a first angle, such as 20° is displayed on the screen 110, as shown in Fig. 15A. When the user keeps the finger F on the screen 110, and continuously moves, from left to right, a second tilt interface image corresponding to the interface 1500 to be rotated at a second angle, such as 80° is displayed on the screen 110, as shown in Fig. 15B. When the user keeps the finger F on the screen 110, but moves, from right to left, a third tilt interface image corresponding to the interface 1500 to be rotated at a third angle, such as 10° is displayed on the screen 110, as shown in Fig. 15C. It is understood that, the specific angle can be determined based on the distance between the contact point CP and the final position of the finger F.

Therefore, the methods and systems for operational interface management can display interfaces of an electronic device with 3D visual effects, and 3D tilt effects when the interface are rotated, thus, enhancing the value of devices and increasing user experience.

Methods for operational interface management, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for interface management, for use in an electronic device, comprising:
displaying at least one interface (S1310) on a screen of the electronic device, wherein the interface comprise a page or a menu;
providing a plurality of candidate tilt interface images corresponding to the interface, wherein the respective candidate tilt interface images correspond to the interface which is to be rotated at various angles;
receiving a signal (S1320), wherein the signal comprises a movement of an object continuously detected on the screen; and
in response to the signal, selecting one of the candidate tilt interface images (S1330) as a specific tilt interface image according to a distance corresponding to the movement of the object on the screen, and displaying the specific tilt interface image (S 1340) on the screen.

2. The method of claim 1, wherein the interface is implemented with multiple display layers, wherein a plurality of objects of the interface are deployed to be displayed in different display layers, such that a 3D visual effect can be viewed via the screen.

3. The method of claims 1 or 2, wherein the at least one interface is placed in a circle across a 3D space to form a 3D object, and when the signal is received, the 3D object is rotated according to the distance of the signal.

4. The method of one or more of the claims 1 to 3, wherein the interface comprises at least one widget, at least one application icon, or at least one button.

5. The method of one or more of the claims 1 to 4, further comprising:
corresponding to a specific angle based on the distance corresponding to the movement of the object on the screen; and
selecting the specific tilt interface image based on the specific angle.

6. A system (100) for interface management for use in an electronic device, comprising:
a storage unit (120) comprising at least one interface and a plurality of candidate tilt interface images corresponding to the at least one interface, wherein the interface comprise a page or a menu, and the respective candidate tilt interface images correspond to the interface which is to be rotated at various angle;
a screen (110) displaying the at least one interface; and
a processing unit (130) receiving a signal, wherein the signal comprises a movement of an object continuously detected on the screen, and in response to the signal, selecting one of the candidate tilt interface images as a specific tilt interface image according to a distance corresponding to the movement of the object on the screen, and displaying the specific tilt interface image on the screen.

7. The system of claim 6, wherein the interface is implemented with multiple display layers, wherein a plurality of objects of the interface are deployed to be displayed in different display layers, such that a 3D visual effect can be viewed via the screen.

8. The system of claims 6 or 7, wherein the at least one interface is placed in a circle across a 3D space to form a 3D object, and when the signal is received, the processing unit rotates the 3D object according to the distance of the signal.

9. The system of one or more of the claims 6 to 8, wherein the interface comprises at least one widget, at least one application icon, or at least one button.

10. The system of one or more of the claims 6 to 9, wherein the processing unit further corresponds to a specific angle based on the distance corresponding to the movement of the object on the screen, and selects the specific tilt interface image based on the specific angle.

11. A machine-readable storage medium comprising a computer program, which, when executed, causes a device to perform a method for interface management, wherein the method comprises:
displaying at least one interface on a screen of the electronic device, wherein the interface comprise a page or a menu;
providing a plurality of candidate tilt interface images corresponding to the interface, wherein the respective candidate tilt interface images correspond to the interface which is to be rotated at various angles;
receiving a signal, wherein the signal comprises a movement of an object continuously detected on the screen; and
in response to the signal, selecting one of the candidate tilt interface images as a specific tilt interface image according to a distance corresponding to the movement of the object on the screen, and displaying the specific tilt interface image on the screen.
